# EUROPÄISCHE PATENTSCHRIFT

(11) **EP 0 806 715 B1**
(45) Veröffentlichungstag und Bekanntmachung des Hinweises auf die Patenterteilung: **17.03.1999**
(21) Anmeldenummer: 95118823.4
(22) Anmeldetag: 30.11.1995
(51) Int. Cl.: G05B 19/19

(54) **Verfahren zum Regeln eines rechnergesteuerten Regalbediengerätes**
Method for controlling a computer driven storage shelf device
Procédé pour la régulation d'un appareil de desserte de rayonnages commandé par ordinateur

(43) Veröffentlichungstag der Anmeldung: 12.11.1997
(73) Patentinhaber: SIEMAG TRANSPLAN GMBH, 57250 Netphen (DE)
(72) Erfinder: Schneider, Volker Rainer, 57072 Siegen (DE); Schüll, Eckhard, 57232 Kreuztal (DE); Beewen, Udo, 57076 Siegen (DE)
(74) Vertreter: Pollmeier, Felix, Dipl.-Ing

(56) Entgegenhaltungen:
- EP-A- 0 423 351
- DE-A- 3 803 626
- US-A- 5 239 248
- HEISS M.: "KENNFELDER IN DER REGELUNGSTECHNIK INPUT-OUTPUT MAPS FOR AUTOMATIC CONTROL" AUTOMATISIERUNGSTECHNIK - AT, Bd. 43, Nr. 8, 1.August 1995, Seiten 363-367, XP000523262

## Beschreibung

Die Erfindung betrifft ein Verfahren zum Regeln des Antriebs eines rechnergesteuerten, und auf einem Fahrrahmen einen Mast mit einer daran angeordneten, mit einem Lastaufnahmemittel versehenen Hubbühne aufweisenden Regalbediengerätes, umfassend einen Stromregel-, einen einen Drehzahlregelkreis einschließenden Antriebsregelkreis und einen Lageregelkreis.

Durch die US-A-5 239 248 ist ein Regelverfahren bekanntgeworden, das die genannten Regelkreise und außerdem einen Zustandsund Störbeobachter aufweist. Die Berechnung der Stellgrößen erfolgt anhand von mittels des Beobachters gewonnenen Signalen in einer zentralen Einheit. Abgesehen davon, daß sich lediglich eine begrenzte Anzahl von Meß- und Stellgrößen verarbeiten läßt, handelt es sich bei diesem bekannten Verfahren zudem ausschließlich um eine reine Positionsregelung.

Die genannten Regalbediengeräte bzw. -förderzeuge, wie beispielsweise durch die DE-C 38 03 626 bekanntgeworden, erfüllen beispielsweise in logistischen Systemen, die als eine wesentliche Komponente ein Hochregallager umfassen, in vollautomatischer oder manueller Bedienungsweise die Transportaufgabe, d.h. den Transfer einer Ladeeinheit vom Einlagerungsort zum Lagerplatz und von dort zum Auslagerungsort. Das Spektrum der einzulagernden Güter erstreckt sich vom Kleingebinde mit einem Gewicht von nur wenigen Kilogramm bis zu ca. 40 Tonnen schweren Coils, beispielsweise zu Bunden gewickelte Metallbänder. Die Lagerhöhen und davon abhängig die Höhe der Regalbediengeräte bewegen sich in einem Bereich von ca. 6 m bis 45 m. Die jeweiligen Lagerdimensionen werden von dem frei verfahrbaren oder auf Schienen geführten Regalbediengerät durch dessen Fahrantrieb in horizontaler X-Richtung, durch den Hubantrieb des an dem senkrechten Mast vertikal verfahrbaren Hubantriebes für die Hubbühne in vertikaler Y-Richtung und durch den Lastaufnahmemittelantrieb in Z-Richtung erschlossen. Die hohen, schlanken Maste, an denen die bereits erwähnten, mitunter recht großen Lasten auf- und abbewegt werden, sind biegeweiche, extrem schwingungsfähige Systeme mit variablen dynamischen Eigenschaften, die z.B. durch motorische Beschleunigung und Verzögerung, Fahrbahnstöße, Bremseneinfall und Reglereinfluß angeregt werden können.

Unter Kosten-, Leistungs- und Zuverlässigkeitsaspekten kommt im Zuge einer technisch-wirtschaftlichen Optimierung von Regalbediengeräten und Krananlagen insbesondere den Fahr- und Hubantrieben einschließlich deren Regelungen eine große Bedeutung zu, da diese neben rein mechanischen Parametern maßgeblich das dynamische Verhalten prägen. Die Ziele der bekannten Steuerungs- und Regelungsstrategien sind die Minimierung der Zeiten zur Ein- bzw. Auslagerung der Lasten (Transporteinheiten bzw. Lagergüter) sowie die Reduzierung der dynamischen Belastung der Struktur und mechanischen Komponenten des Regalbediengerätes. Hierbei ist zu beachten, daß sich die Spielzeiten von Hub- und Fahrantrieb aus reinen Bewegungszeiten und aus Abklingzeiten für die z.B. durch Beschleunigen oder Bremsen angeregten Schwingungen von Hubmast oder -bühne zusammensetzen. Bei einem schwingenden hast kann die Lastübergabe von der Hubbühne auf den Regalstellplatz wegen einer möglichen Beschädigungsgefahr zunächst nicht durchgeführt werden; es muß vielmehr das Abklingen der Amplitude auf einen Grenzwert abgewartet werden. Hieraus läßt sich entnehmen, daß nicht zuletzt das dynamische Verhalten maßgeblich den Durchsatz und damit die Wirtschaftlichkeit eines ein Hochregallager einschließenden logistischen Systems beeinflußt.

Der Forderung nach einer Durchsatzsteigerung durch höhere Beschleunigungen und Geschwindigkeiten steht somit entgegen, daß hierdurch größere Schwingungsamplituden und längere Abklingzeiten unvermeidlich sind; im Ergebnis erhöht sich somit die Spielzeit trotz Verringerung der Bewegungszeit. Als Ansatzpunkte zur Lösung des somit vorliegenden Optimierungsproblems mit widersprüchlichen Zielsetzungen sind die Regler der Antriebe herangezogen worden, da aufgrund der logistischen Aufgabenstellungen und der aus Festigkeitsgründen erforderlichen Dimensionierung die geometrische Gestalt des Regalbediengerätes nur schwerlich verändert werden kann. Zu diesem Zweck eingesetzte Antriebsregler für Hub- und Fahrantrieb mit Schnittstellen zu unterschiedlichen drehzahlveränderlichen elektrischen Antrieben sind Servomotoren mit Servoantriebsverstärkern, Gleichstrommotoren mit Stromrichtern und Drehstrom-Asynchronmotoren mit Frequenzumrichtern. Die genannten Schnittstellen grenzen den Regler hierarchisch gesehen nach unten hin ab; die Schnittstelle nach oben wird durch die Regalbediengeräte-Steuerung vorgegeben, die dem Regler die Zielpunkte der Fahrbewegungen mitteilt und für Sicherheitsfunktionen, Endabschaltungen, Koordinierungsaufgaben, Fehlerdiagnose, Kommunikation zum Lagerverwaltungsrechner, etc. zuständig ist. Hinzu kommt eine externe Schnittstelle zu einem Wegmeßsystem, das dem Regler über Absolut- oder indirekte Messung die momentane Lageposition des Regalbediengerätes übermittelt. Diese Meßsysteme sind in formschlüssiger schlupffreier Ausführung und in reibschlüssiger schlupfbehafteter Ausführung mit anschließender Fachfeinpositionierung üblich.

Zum Stand der Technik zählende Reglerkonzepte sind der sogenannte "3-Punkt-Lageregler" und der "Kaskadenregler", die ausgehend von zunächst drei unterschiedlichen, kaskadenförmig geschalteten Reglerkreisen gebildet werden: Dem Stromregelkreis als inneren Kreis, dem Drehzahlregelkreis und dem Lageregelkreis als äußeren Kreis. Von diesen Reglerkonzepten stellt der "3Punkt-Lageregler" streng genommen keinen Lageregler, sondern eine wegabhängige Drehzahlsteuerung dar, mit der Folge, daß ein mehrstufiger, mit Zeitverlusten behafteter Verzögerungsvorgang entsteht. Da kein kontinuierlicher Abgleich zwischen Lage-Ist- und Sollwert stattfindet, lassen sich die kumulierten Lagedifferenzen erst am Ende des Verzögerungsvorgangs während einer Schleichfahrt mit reduzierter Geschwindigkeit ausgleichen. Die somit mehrstufige Positionierung bringt aber mehrfache Drehzahländerungen und damit auch Änderungen von Beschleunigung und Verzögerung mit sich, was es begünstigt, Schwingungen des Mastes des Regalbediengerätes anzuregen. Im Gegensatz dazu zeichnet den "Kaskadenregler" aus, daß ein kontinuierlicher Vergleich von Lage-Ist- und Sollwert stattfindet und Lagedifferenzen aktiv durch Anpassung des Drehzahlsollwertes ausgeglichen werden. Aufgrund dieses Konzeptes ergeben sich weniger Ansatzpunkte für eine Schwingungsanregung.

Zur Schwingungsminimierung wird daher bei beiden Reglerkonzepten ein passives Verfahren genutzt, indem die zeitliche Änderung der Beschleunigung bzw. der damit einhergehende Ruck durch Vorgabe einer geeigneten Führungsgröße begrenzt wird. Es wird demnach von einer sprunghaften Beschleunigungsänderung zu einer linear ansteigenden oder zu einer sinusförmigen Verrundung übergegangen. Nachteilig bei dieser Schwingungsminimierung ist allerdings, daß durch die Verrundung bei Beibehaltung des Beschleunigungsmaximalwertes die mittlere Beschleunigung sinkt, was unvermeidlich mit Zeitverlusten einhergeht.

Der Erfindung liegt daher die Aufgabe zugrunde, ein gattungsgemäßes Regelverfahren zu schaffen, das es ermöglicht, die bei den bekannten Reglerkonzepten beschränkten Eingriffsmöglichkeiten und engen technischen Grenzen entscheidend zu erweitern.

Diese Aufgabe wird erfindungsgemäß dadurch gelöst, daß das momentane dynamische Verhalten des Regalbediengerätes aus vorhandenen Daten eines Zustands- und Störbeobachterreglermoduls, unter Nutzung von Informationen über die Gerätedynamik beinhaltenden Meß- und Regelgrößen und anhand von Koeffizienten-Kennfeldern, errechnet wird, wobei die Kennfelder konstruktive Einzelheiten bzw. dynamische Eigenschaften des Fördergerätes einbeziehen und ausgehend von einer Basiseinstellung gerätedynamischer Größen des Regalbediengerätes und einem iterativen Schätzalgorithmus von einem eine automatische selbstlernende Koeffizienten-Identifikation durchführenden Reglermodul ermittelt und auf der Grundlage mathematischer Gleichungen des errechneten momentanen dynamischen Verhaltens , beim Regeln des Antriebs, Schwingungen des Regalbediengerätes aktiv gedämpft werden. Es liegt damit ein durch eine aktive, den aktuellen dynamischen Zustand des Regalbediengerätes berücksichtigende Schwingungsdämpfung erweiterter, selbstlernender adaptiver Zustandsregler vor, wodurch sich ein erheblich breiteres Spektrum der Optimierungsmöglichkeiten ergibt. Das Regelverfahren integriert neben dem internen Stromregelkreis, dem Drehzahlregelkreis und dem Lageregelkreis weitere, Aufschluß über das momentane dynamische Verhalten des Regalbediengerätes beinhaltende Informationen, z.B. die Mastauslenkung und relative Geschwindigkeit der Mastspitze und die Lageabweichung bei formschlüssigen Zahnriemenantrieben. Diese zusätzlichen Informationen bzw. gerätedynamischen Größen zur Beschreibung der Gerätedynamik werden nicht meßtechnisch gewonnen, sondern mit Hilfe eines mathematischen Modells des Zustands- und Störbeobachterreglermoduls aus vorhandenen Daten errechnet, beispielsweise die Mastauslenkung und -relativgeschwindigkeit aus dem vorhandenen Stromsignal.

Während die Reglerkoeffizienten der unterschiedlichen Regelkreise bei den bekannten Reglerkonzepten konstante Größen und jeweils nur für einen dynamischen Zustand optimal gesetzt sind, weist das erfindungsgemäße Regelverfahren keine konstanten Koeffizienten, sondern spezielle Koeffizienten-Kennfelder auf, die entscheidend von den in der Regelungstechnik ganz allgemein üblichen, z.B. durch die DE-Z "Automatisierungstechnik, Bd. 43, Nr. 8, 1. August 1995, Seiten 363 bis 367 bekanntgewordenen Kennfelder abweichen, nämlich konstruktive Einzelheiten bzw. dynamische Eigenschaften des Fördergerätes einbeziehen. Hierzu zählen beispielsweise die Anzahl der vorhandenen Maste (einer oder zwei), die Steifigkeit des Mastes, die Lastposition (Höhe der Hubbühne bzw. Seillänge) und das Gewicht der Nutzlast. Es werden somit keine Regelparameter abgelegt, sondern Daten, aus denen die Regelparameter stets berechnet werden. Es wird folglich erfindungsgemäß berücksichtigt, daß die Koeffizienten in der Praxis abhängig sind von beispielsweise der aktuellen Position der Hubbühne, der Größe der Nutzlast und weiteren Einflußgrößen, welche sämtlich von den Kennfeldern abgedeckt sind. Damit diese nicht in einem anspruchsvollen Prozeß zeitaufwendig ermittelt werden müssen, führt das Reglermodul eine automatische selbstlernende Koeffizientenidentifikation durch, indem es ausgehend von einer Basiseinstellung mit Hilfe des mathematischen Modells des Regalbediengerätes und einem iterativen Schätzalgorithmus die Kennfelder ermittelt. Der Lernmodus des Reglermoduls geschieht hierbei in der Form, daß automatisch eine Testfahrt abläuft und in der Konstantfahrtphase ein zusätzliches Stromtestsignal als Führungsgröße aufgebracht wird. Aus dem Soll-/Ist-Vergleich errechnet der Schätzalgorithmus die Parameter der Übertragungsfunktion, die wiederum mit Hilfe des mathematischen Modells zu den Koeffizienten-Kennfeldern führen. Aufgrund dieser Regelung wird im Idealfall ein jegliches Schwingen vermieden.

Eine bevorzugte Ausgestaltung der Erfindung sieht vor, daß ein aktueller Raddruck des Regalbediengerätes von dem Zustands- und Störbeobachterreglermodul errechnet und im Antriebs- bzw. Drehzahlregelkreis das Antriebsmoment bzw. der Motorstrom auf das aktuell mögliche oder -bei meßtechnischer Erfassung - das zu erwartende mögliche Maximum begrenzt wird. Hiermit lassen sich die Auswirkungen der Dynamik des Fördergerätes auf die Raddrücke zwischen den Lauf- bzw. Antriebsrädern und der Schiene bzw. dem Fundament berücksichtigen. Bei sinkenden Raddrücken übertragen die angetriebenen Räder geringere Reibkräfte, was in Beschleunigungs- bzw. Verzögerungsphasen zu Schlupf- und damit zum Durchdrehen bzw. zum Blockieren der Räder führen kann. Wenngleich die verwirklichte aktive Schwingungsdämpfung diesem Einfluß schon maßgeblich entgegenwirkt, ermöglicht die Drehmomentenüberwachung aufgrund eines entsprechenden Reglermoduls die Eliminierung dieses Einflusses im Antriebsregelkreis. Mit Hilfe des Zustands- und Störbeobachterreglermoduls wird nämlich kontinuierlich der aktuelle Raddruck errechnet und das Antriebsmoment bzw. der Motorstrom entsprechend aktuell angepaßt. Der Vorteil des Drehmomenten-Überwachungsreglermoduls besteht folglich darin, daß stets entsprechend dem dynamischen Verhalten des Regalbediengerätes das momentane Maximum an Beschleunigungs- bzw. Bremsmoment übertragen wird.

Nach einer Ausgestaltung der Erfindung wird die Momenten- bzw. Motorstromreglerschleife durch einen kontinuierlichen Vergleich von Antriebsdrehzahl und Absolutgeschwindigkeit des Regalbediengerätes unter Berücksichtigung der tatsächlich zurückgelegten, von einem Absolut-Wegmeßsystem ermittelten Wegstrecke überlagert und bei auftretenden Differenzen der Motor korrigiert. Bei auftretenden, z.B. durch Schlupf hervorgerufenen Differenzen wird in diesem Fall der Regler zu einer Korrektur des Motorstromes veranlaßt.

Wenn vorteilhaft Lageabweichungen des Regalbediengerätes aufgrund von belastungsbedingten Durchbiegungen gegenüber der durch das Absolut-Wegmeßsystem ermittelten Position automatisch korrigiert werden, lassen sich z.B. die Einflüsse aufgrund der konstruktionsbedingt exzentrisch am Hubmast geführten Hubbühne ausgleichen. Die Exzentrizität führt nämlich unter dem Einfluß von Eigengewicht und Nutzlast abhängig von der momentanen Hubbühnenhöhe zu einer statischen Durchbiegung und somit zu einer Lageabweichung gegenüber der durch das Wegmeßsystem ermittelten Position. Es bedarf damit keiner einen die Durchsatzproblematik erhöhenden, zusätzlichen Zeitaufwand erfordernden Feinpositionierung, die zudem einen erheblichen Installationsaufwand für Sensorik und Orientierungsmarken erfordert. Dieser Aufwand ist erfindungsgemäß nicht mehr notwendig, weil ein weiteres Reglermodul mit Hilfe des Zustandsund Störbeobachterreglermoduls unter Berücksichtigung von tatsächlicher Last und Hubbühnenhöhe sowie unter Einbeziehung des entsprechenden Verformungskennfeldes den Lagefehler kontinuierlich errechnet und eine automatische Korrektur des Lagesollwertes durchgeführt wird.

Nach einer weiteren Ausgestaltung der Erfindung wird der Energieverbrauch des Regalbediengerätes abhängig von der aktuellen Auslastung geregelt. Energiekostensparend und im Sinne des gesteigerten Umweltbewußtseins beinhaltet das erfindungsgemäße Regelverfahren somit ein Strategiereglermodul, das es ermöglicht, entsprechend der aktuellen Auslastungssituation des Regalbediengerätes die jeweils energieminimale Betriebsstrategie bzw. -weise anzuwählen. Bei einer hohen erforderlichen Durchsatzleistung werden Hub- und Fahrantrieb zeitsynchronisiert, d.h. die schnellere Achse wird durch Reduzierung der Beschleunigung bzw. der Verzögerung der langsameren Achse angepaßt. Ist die zu erbringende Durchsatzleistung eher gering, wird entsprechend des tatsächlichen Durchsatzes und damit auftragsabhängig der maximale Energieverbrauch in Form von Beschleunigungs- und Verzögerungsgrenzwerten vorgegeben.

Die Erfindung sieht weiterhin vor, daß die Positioniergenauigkeit des Regalbediengerätes an die unterschiedlichen Transporteinheiten bzw. Lagergüter angepaßt verschieden geregelt wird. Durch Integration eines Positionierreglermoduls in das erfindungsgemäße Regelverfahren läßt sich die jeweilige Positioniertoleranz abhängig von der jeweiligen Transporteinheit frei wählen. Hiermit ist es möglich, dem großen Spektrum der einzulagernden Güter hinsichtlich Gewicht, Dimension und Ladungsträger Rechnung zu tragen. Die unterschiedlichen Transporteinheiten erfordern zum sicheren Transfer vom Regalbediengerät in das Lagerfach des Hochregallagers unterschiedliche Lagetoleranzen, wobei sich durch das Positionierreglermodul erreichen läßt, daß zur Einhaltung möglichst geringer Spielzeiten die Positioniergenauigkeit nicht höher ist als unbedingt nötig.

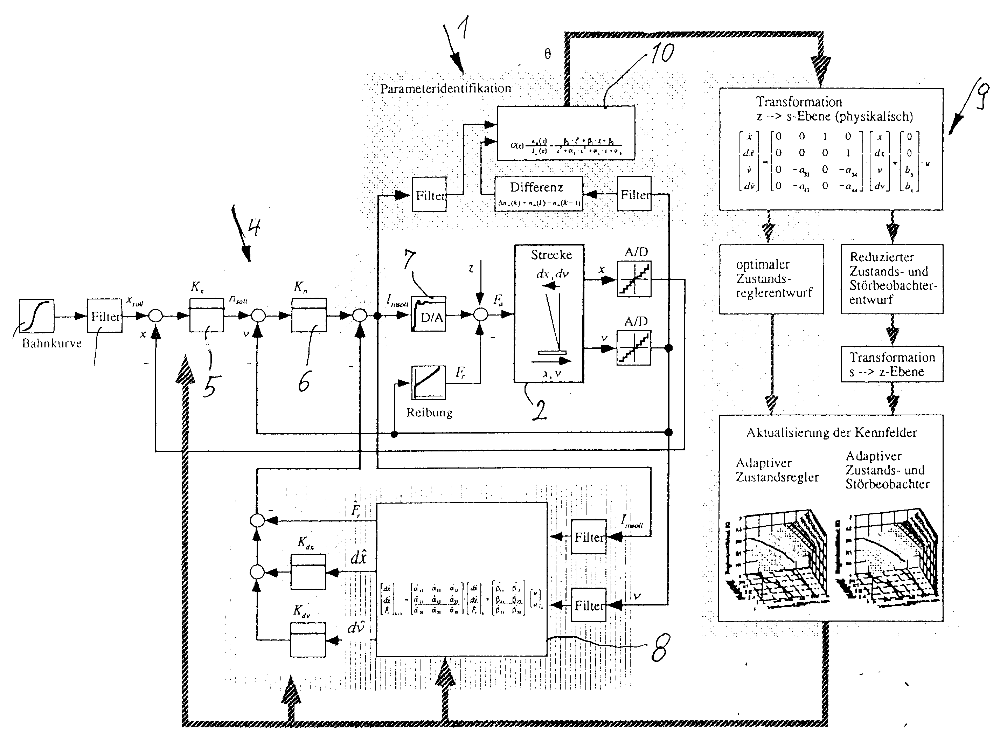

Weitere Einzelheiten und Vorteile der Erfindung ergeben sich aus den Ansprüchen und dem in der Zeichnung dargestellten Reglschema eines selbsteinstellenden, adaptiven Zustandsreglers 1 für ein Regalbediengerät 2. Der Regler 1 umfaßt einen Führungsgrößengenerator 3, einen Kaskadenregler 4 mit einem Lageregler 5 und einem Drehzahlregler 6 sowie einen Stromregler 7. Diese sind über entsprechende Regelkreise sowohl mit dem Regalbediengerät 2 als auch einem Zustands- und Störbeobachterreglermodul 8 verknüpft, das mit Hilfe eines mathematischen Modells aus vorhandenen Daten die zur Beschreibung der Gerätedynamik erforderlichen zusätzlichen Informationen errechnet. Dabei wird nicht von konstanten Koeffizienten, sondern von Koeffizienten-Kennfeldern ausgegangen, die von einem eine automatische selbstlernende Koeffizientenidentifikation durchführenden Reglermodul 9 unter Zugrundelegung einer Basiseinstellung der Größen des Regalbediengerätes 2 und einem Modul 10 für einen iterativen Schätzalgorithmus ermittelt werden.

Der Regler 1 vereint als Vorteile eine aktive Schwingungsdämpfung zur Eliminierung von Schwingungen und Verkürzung der Abklingzeit, durch die Lageregelung eine schnellstmögliche Annäherung an den Zielpunkt, einen optimalen Reglerdurchgriff und einen geringeren Schleppfehler, eine Anti-Schlupf-Regelung sowie-da keine Schwingungsanregung vorliegt - höhere Beschleunigungswerte. Außerdem ergeben sich eine geringere dynamische Belastung der gesamten Konstruktion und des Antriebsstranges sowie - auch unter Berücksichtigung von statischen und dynamischen Verformungen des Regalbediengerätes 2 - ein verbessertes Positionierverhalten sowie eine verkürzte Inbetriebnahme und Anpassung an veränderte Betriebsbedingungen durch den Lernmodus des Moduls. Die Regelparameter lassen sich unter Berücksichtigung von unterschiedlichen Lasten, Hubhöhen und Geometrien, einem konstruktionsbedingt unterschiedlichen dynamischen Verhalten, unterschiedlicher Antriebe und Art der Kraftübertragung und unterschiedlicher statischer und dynamischer Veformungen optimieren. Darüber hinaus können frei wählbare, gegebenenfalls kombinierbare Betriebsstrategien durchgeführt werden.

## Patentansprüche

1. Verfahren zum Regeln des Antriebs eines rechnergesteuerten, auf einem Fahrrahmen einen Mast mit einer daran angeordneten, mit einem Lastaufnahmemittel versehenen Hubbühne aufweisenden Regalbediengerätes (2), umfassend einen Stromregelkreis (7), einen einen Drehzahlregelkreis (6) einschließenden Antriebsregelkreis und einen Lageregelkreis (5),
**dadurch gekennzeichnet,**
daß das momentane dynamische Verhalten des Regalbediengerätes (2) aus vorhandenen Daten eines Zustands- und Störbeobachterreglermoduls (8), unter Nutzung von Informationen über die Gerätedynamik beinhaltenden Meß- und Stellgrößen und anhand von Koeffizienten-Kennfeldern, errechnet wird, wobei die Kennfelder konstruktive Einzelheiten bzw. dynamische Eigenschaften des Fördergerätes einbeziehen und ausgehend von einer Basiseinstellung gerätedynamischer Größen des Regalbediengerätes und einem iterativen Schätzalgorithmus (10) von einem eine automatische selbstlernende Koeffizientenidentifikation durchführenden Reglermodul (9) ermittelt und auf der Grundlage mathematischer Gleichungen des errechneten momentanen dynamischen Verhaltens, beim Regeln des Antriebs, Schwingungen des Fördergerätes aktiv gedämpft werden.

2. Verfahren nach Anspruch 1,
**dadurch gekennzeichnet,**
daß ein aktueller Raddruck des Regalbediengerätes (2) von dem Zustands- und Störbeobachterreglermodul (8) errechnet und im Antriebs- bzw. Drehzahlregelkreis das Antriebsmoment bzw. der Motorstrom auf das aktuell mögliche Maximum begrenzt wird.

3. Verfahren nach Anspruch 2,
**dadurch gekennzeichnet,**
daß die Momenten- bzw. Motorstromreglerschleife durch einen kontinuierlichen Vergleich von Antriebsdrehzahl und Absolutgeschwindigkeit des Regalbediengerätes (2) unter Berücksichtigung der tatsächlich zurückgelegten, von einem Absolut-Wegmeßsystem ermittelten Wegstrecke überlagert und bei auftretenden Differenzen der Motorstrom korrigiert wird.

4. Regelverfahren nach einem der Ansprüche 1 bis 3,
**dadurch gekennzeichnet,**
daß Lageabweichungen des Regalbediengerätes (2) aufgrund von belastungsbedingten Durchbiegungen gegenüber der durch das Absolut-Wegmeßsystem ermittelten Position automatisch korrigiert werden.

5. Regelverfahren nach einem der Ansprüche 1 bis 4,
**dadurch gekennzeichnet,**
daß der Energieverbrauch des Regalbediengerätes (2) abhängig von der aktuellen Auslastung geregelt wird.

6. Regelverfahren nach einem der Ansprüche 1 bis 5,
**dadurch gekennzeichnet,**
daß die Positioniergenauigkeit des Regalbediengerätes (2) an die unterschiedlichen Transporteinheiten bzw. Lagergüter angepaßt verschieden geregelt wird.

## Claims

1. Method of regulating the drive of a computer-controlled shelf-servicing apparatus (2), which has on a travel chassis a mast with a lifting plafform arranged thereat and provided with load-receiving means and which comprises a current-regulating circuit (7), a drive regulating circuit including a rotational speed regulating circuit (6) and a storage shelf circuit (5), characterised in that the instantaneous dynamic behaviour of the shelf-servicing apparatus (2) is computed from available data of a state and disturbance observation regulating module (8), with utilisation of items of information by way of measuring and setting magnitudes containing the apparatus dynamics and on the basis of coefficient characteristic fields, wherein the characteristic fields include constructional details or dynamic properties of the shelf-servicing apparatus and are ascertained starting out from a basic setting of apparatus dynamic magnitudes of the shelf-servicing apparatus and an iterative estimating algorithm (10) by a regulating module (9) which carries out an automatic self-learning coefficient identification, and, on the basis of mathematical equations of the computed instantaneous dynamic behaviour, oscillations of the shelf-servicing apparatus are actively damped in the regulation of the drive.

2. Method according to claim 1, characterised in that an actual wheel pressure of the shelf-servicing apparatus (2) is computed by the state and disturbance observation regulating module (8) and the drive torque or motor current is limited in the drive or rotational speed regulating circuit to the actual possible maximum.

3. Method according to claim 2, characterised in that the torque or motor current regulating loop is superimposed by a continuous comparison of drive rotational speed and absolute speed of the shelf-servicing apparatus (2) with consideration of the actual path, which was covered, as ascertained by an absolute travel measuring system and is corrected in the case of arising differences in the motor current.

4. Regulating method according to one of claims 1 to 3, characterised in that positional deviations of the shelf-servicing apparatus (2), which are due to bending caused by loading, relative to the position ascertained by the absolute travel measuring system are automatically corrected.

5. Regulating method according to one of claims 1 to 4, characterised in that the energy consumption of the shelf-servicing apparatus (2) is regulated in dependence on the actual loading-up.

6. Regulating method according to one of claims 1 to 5, characterised in that the positional accuracy of the shelf-servicing apparatus (2) of the different transport units or goods to be stored is differently regulated in adapted manner.

## Revendications

1. Procédé pour la régulation de l'entraînement d'un appareil de desserte de rayonnages (2) commandé par ordinateur et comportant sur un cadre mobile un mât sur lequel est agencée une plate-forme de levage pourvue d'un organe récepteur de charge, comprenant un circuit de régulation de courant (7), un circuit de régulation d'entraînement incluant un circuit de régulation de vitesse de rotation (6), et un circuit de régulation de position (5), caractérisé en ce que le comportement dynamique momentané de l'appareil de desserte de rayonnages (2) est calculé à partir de données présentes d'un module régulateur et observateur de l'état et des perturbations (8), en utilisant des informations sur des grandeurs de mesure et de régulation incluant la dynamique de l'appareil, et à partir de champs caractéristiques de coefficients, les champs caractéristiques incluant des détails structurels ou des propriétés dynamiques de l'appareil de desserte de rayonnages et étant déterminés, à partir d'un réglage de base de grandeurs dynamiques de l'appareil de desserte de rayonnages et d'un algorithme d'estimation itératif (10), par un module régulateur (9) effectuant une identification de coefficient automatique à auto-apprentissage et, en se basant sur des équations mathématiques du comportement dynamique momentané calculé, les oscillations de l'appareil de desserte de rayonnages sont amorties de façon active lors de la régulation de l'entraînement.

2. Procédé selon la revendication 1, caractérisé en ce qu'une pression de roue actuelle de l'appareil de desserte de rayonnages (2) est calculée par le module régulateur et observateur de l'état et de perturbations (8), et en ce que dans le circuit de régulation d'entraînement ou de vitesse de rotation, le couple d'entraînement ou le courant de moteur est limité au maximum actuellement possible.

3. Procédé selon la revendication 2, caractérisé en ce que la boucle de régulation du couple ou du courant de moteur est superposée par une comparaison continue de la vitesse de rotation d'entraînement et de la vitesse absolue de l'appareil de desserte de rayonnages (2), en prenant en compte le trajet réellement parcouru et détecté par un système de mesure de course absolue, et en ce que lors de l'apparition de différences, le courant de moteur est corrigé.

4. Procédé de régulation selon l'une quelconque des revendications 1 à3, caractérisé en ce que des écarts de position de l'appareil de desserte de rayonnages (2), causés par des fléchissements dus à la charge, par rapport à la position détectée par le système de mesure de course absolue sont corrigés automatiquement.

5. Procédé de régulation selon l'une quelconque des revendications 1 à 4, caractérisé en ce que la consommation énergétique de l'appareil de desserte de rayonnages (2) est régulée en fonction de la charge actuelle.

6. Procédé de régulation selon l'une quelconque des revendications 1 à 5, caractérisé en ce que la précision de positionnement de l'appareil de desserte de rayonnages (2) est régulée différemment avec ajustement aux différentes unités de transport ou aux différentes marchandises à stocker.
